# EUROPEAN PATENT APPLICATION

(11) **EP 2 927 834 A1**
(43) Date of publication of application: **07.10.2015**
(21) Application number: 15160140.8
(22) Date of filing: 20.03.2015
(51) Int. Cl.: G06F 21/31, G06F 21/34

(54) **Information processing apparatus, information processing method, and recording medium**

(30) Priority: 31.03.2014 JP 2014073031
(71) Applicant: Sony Corporation, Tokyo 108-0075 (JP)
(72) Inventor: Shirai, Taizo, Minato-ku, Tokyo 108-0075 (JP); Sakumoto, Koichi, Minato-ku, Tokyo 108-0075 (JP); Taki, Yuhei, Minato-ku, Tokyo 108-0075 (JP); Sawai, Kunihito, Minato-ku, Tokyo 108-0075 (JP); Ichikawa, Miwa, Minato-ku, Tokyo 108-0075 (JP); Mizunuma, Hiroyuki, Minato-ku, Tokyo 108-0075 (JP)
(74) Representative: D Young & Co LLP

(57) **Abstract**

There is provided an information processing apparatus including an information obtaining unit configured to obtain authentication validation information input to another apparatus from the another apparatus, and an authentication unit configured to, if the authentication validation information obtained by the information obtaining unit from the another apparatus matches authentication validation information managed by the information processing apparatus, perform an authentication process between the information processing apparatus and the another apparatus using the authentication information managed by the information processing apparatus.

## Description

### CROSS REFERENCE TO RELATED APPLICATIONS

This application claims the benefit of Japanese Priority Patent Application JP 2014-073031 filed March 31, 2014.

### BACKGROUND

The present disclosure relates to information processing apparatuses, information processing methods, and recording media.

The methods of authenticating individuals fall into three categories: knowledge-based authentication; possession-based authentication; and biometric authentication. Examples of knowledge-based authentication include authentication based on a password. Examples of possession-based authentication include authentication using a magnetic card with a magnetic stripe or an IC card with an IC chip. Examples of biometric authentication include authentication based on a fingerprint, authentication based on veins, and authentication based on an iris.

In the case of possession-based authentication, the authentication may be performed by a key device containing key information communicating with another device which is external to the key device and for which the user of the key device is to be authenticated (such a device is hereinafter referred to as an "authenticating device"). For example, JP 2004-62283A and JP 2007-272352A describe techniques of authenticating an individual using a personal identification number (PIN) stored in an IC card.

### SUMMARY

In both of the above techniques, a PIN is read from an IC card and is then checked by a personal computer (PC) that is a authenticating device that authenticates an individual possessing the IC card. However, it is desirable that the key device can store a variety of types of information for authentication in addition to PINs. It is also desirable in terms of user convenience that, in possession-based authentication using a key device, an authentication process between the authenticating device and the key device can be performed by only operating the authenticating device.

Therefore, the present disclosure proposes a novel and improved information processing apparatus and recording medium in which an authentication process is completed by only operating an authenticating device that performs authentication without operating a device that contains information for authentication.

Various respective aspects and features of the invention are defined in the appended claims.

According to an embodiment of the present disclosure, there is provided an information processing apparatus including an information obtaining unit configured to obtain authentication validation information input to another apparatus from the another apparatus, and an authentication unit configured to, if the authentication validation information obtained by the information obtaining unit from the another apparatus matches authentication validation information managed by the information processing apparatus, perform an authentication process between the information processing apparatus and the another apparatus using the authentication information managed by the information processing apparatus.

According to another embodiment of the present disclosure, there is provided an information processing apparatus including an information transmission unit configured to transmit input authentication validation information to another apparatus, and an authentication unit configured to perform an authentication process between the information processing apparatus and the another apparatus based on authentication information managed by the another apparatus.

According to another embodiment of the present disclosure, there is provided a non-transitory computer-readable recording medium having a computer program recorded thereon, the computer program causing a computer to execute obtaining authentication validation information input to another apparatus from the another apparatus, and, performing an authentication process between the computer and the another apparatus using key information managed by the computer if the authentication validation information obtained from the another apparatus matches authentication validation information managed by the computer.

According to another embodiment of the present disclosure, there is provided a non-transitory computer-readable recording medium having a computer program recorded thereon, the computer program causing a computer to execute transmitting input authentication validation information to another apparatus, and performing an authentication process between the computer and the another apparatus based on authentication information managed by the another apparatus.

As described above, according to one or more embodiments of the present disclosure, a novel and improved information processing apparatus and recording medium are provided in which an authentication process is completed by only operating an authenticating device that performs authentication without operating a device that contains information for authentication.

Note that the above advantages are not necessarily limiting. In addition to or instead of the above advantages, any advantages described in the present specification or other advantages arising from the present specification may be achieved.

### BRIEF DESCRIPTION OF THE DRAWINGS

Embodiments of the invention will now be described with reference to the accompanying drawings, throughout which like parts are referred to by like references, and in which:
FIG. 1A is an explanatory diagram illustrating an example overall configuration of an information processing system 1 according to an embodiment of the present disclosure;
FIG. 1B is an explanatory diagram illustrating an example overall configuration of an information processing system 1 according to an embodiment of the present disclosure;
FIG. 2 is an explanatory diagram illustrating an example functional configuration of a portable terminal 100 according to an embodiment of the present disclosure;
FIG. 3 is an explanatory diagram illustrating example information stored in a storage unit 150;
FIG. 4 is a diagram for describing an example functional configuration according to a control unit 110 included in a portable terminal 100 according to an embodiment of the present disclosure;
FIG. 5 is an explanatory diagram illustrating an example functional configuration of a PC 200 according to an embodiment of the present disclosure;
FIG. 6 is a sequence diagram showing an example operation of a portable terminal 100 and a PC 200 according to an embodiment of the present disclosure;
FIG. 7 is a diagram for describing an example operation of a portable terminal 100 and a PC 200 according to an embodiment of the present disclosure;
FIG. 8 is a diagram for describing an example operation of a portable terminal 100 and a PC 200 according to an embodiment of the present disclosure;
FIG. 9 is a sequence diagram showing an example operation of a portable terminal 100, a PC 200, and a server apparatus 300 according to an embodiment of the present disclosure; and
FIG. 10 is an explanatory diagram illustrating an example hardware configuration.

### DETAILED DESCRIPTION OF THE EMBODIMENT(S)

Hereinafter, preferred embodiments of the present disclosure will be described in detail with reference to the appended drawings. Also, throughout the present specification and the drawings, the same reference numerals are given to constituent elements having substantially the same functional configuration and the repeated description thereof will be omitted.

The description will be made in the following order.
1 Embodiment of the present disclosure
   1.1. Example of system configuration
   1.2. Example of functional configuration
   1.3. Example of system operation
2. Example of hardware configuration
3. Conclusion

### <1. Embodiment of the present disclosure>

### [1.1. Example of system configuration]

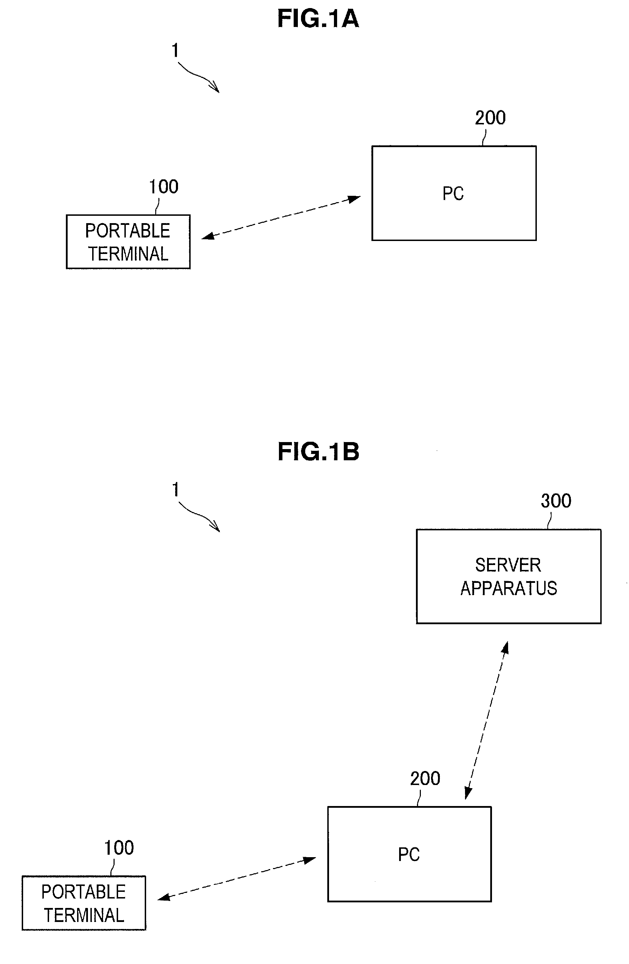

First, an example configuration of an information processing system according to an embodiment of the present disclosure will be described with reference to the drawings. FIG. 1A is an explanatory diagram illustrating an example overall configuration of an information processing system 1 according to an embodiment of the present disclosure. Hereinafter, the example overall configuration of the information processing system 1 according to an embodiment of the present disclosure will be described with reference to FIG. 1A.

As illustrated in FIG. 1A, the information processing system 1 according to an embodiment of the present disclosure is configured to include a portable terminal 100 and a personal computer (PC) 200.

The information processing system 1 according to an embodiment of the present disclosure is a system that authenticates a user who is attempting to use a service provided by the PC 200, according to a password authentication scheme, public key authentication scheme, common key cryptography scheme, digital signature scheme, or the like. Therefore, the portable terminal 100 is an example device that is authenticated by the PC 200 when the user is attempting to use a service provided by the PC 200. The PC 200 is an example apparatus that performs an authentication process. The portable terminal 100 is a device that, when the portable terminal 100 is authenticated by the PC 200 according to the public key authentication scheme, generates and/or stores a pair of a public key pk and a secret key sk. In order to use a service provided by the PC 200, the portable terminal 100 transmits only the public key pk of the generated key pair to the PC 200.

When the portable terminal 100 is authenticated by the PC 200 according to the public key authentication scheme, the portable terminal 100 may generate and store a plurality of key pairs instead of only one key pair. The generation and storage of a plurality of key pairs allows the portable terminal 100 to set different public keys pk for different services for which the portable terminal 100 is to be authenticated.

The PC 200 is an apparatus that performs authentication according to the password authentication scheme, public key authentication scheme, common key cryptography scheme, or digital signature scheme. For example, when the PC 200 authenticates the portable terminal 100 according to the public key authentication scheme, the PC 200 previously stores the public key pk that has been generated and transmitted by the portable terminal 100. The PC 200 authenticates a user attempting to use a service, using information generated based on the public key pk received from the portable terminal 100 and the secret key sk corresponding to the public key pk generated by the portable terminal 100. Specifically, the PC 200 performs authentication using a response received from the portable terminal 100, that is made with respect to a challenge produced based on the public key pk, that is transmitted from the PC 200 to the portable terminal 100. In the embodiment, a public key authentication scheme is not limited to a specific scheme. For example, a public key authentication scheme which uses RSA cryptography or a public key authentication scheme which uses elliptic curve cryptography, may be used. Further, a public key authentication scheme using multi-order multivariate simultaneous equations that are difficult to solve as a basis for security may be used, as described in, for example, JP 2012-98690A. Details will be described later.

When authentication is performed on the portable terminal 100 using a password authentication scheme, the PC 200 obtains an ID and password for using the PC 200 from the portable terminal 100, and performs an authentication process using the obtained ID and password.

The service provided by the PC 200 may include, for example, login or unlocking of the PC 200, execution of an application installed in the PC 200, reproduction of contents (for example, music data, still image data, video data, or electronic book data) on the PC 200, or the like. The process of reproducing contents on the PC 200 may include, for example, a music or video reproduction process, image display process, and electronic book reproduction process. When the authentication is performed by the PC 200 according to the public key authentication scheme, the user of the PC 200 can lock the login or unlocking of the PC 200, the execution of an application installed in the PC 200, the reproduction of contents on the PC 200, or the like, as described above, by generating a pair of keys, i.e., the public key pk and the secret key sk, with the portable terminal 100 and storing the public key pk in the PC 200. When execution of a service locked is being attempted, the PC 200 transmits an authentication request to the portable terminal 100 having the secret key sk corresponding to the public key set for the service, and determines whether or not to authorize the portable terminal 100 to use the service, based on a reply from the portable terminal 100.

The portable terminal 100 may be, for example, a device such as a smartphone, table type terminal, mobile telephone, or PHS or may be, for example, a wearable device of wristwatch type, wristband type, finger ring type, glasses type, pendant type, attachment type on human body such as nail or skin, etc., or a key chain type device. Any device that can generate and store a user ID and a password, or a pair of keys, i.e., the public key pk and the secret key sk, and communicate with the PC 200 may be used as the portable terminal 100. The PC 200 may be, for example, a television, smartphone, tablet type terminal, glasses type wearable device, camera, camcorder, hard disk recorder, or game device. Any device that can store the public key pk and communicate with the portable terminal 100 may be used as the PC 200.

The communication between the portable terminal 100 and the PC 200 may be wired communication or may be wireless communication. In the following description, the communication between the portable terminal 100 and the PC 200 is assumed to be wireless communication unless otherwise specified. Also, in the wireless communication between the portable terminal 100 and the PC 200, wireless LAN, Bluetooth (registered trademark), ZigBee (registered trademark), NFC (near field communication), or the like may be used, for example.

In this embodiment, when an authentication process is performed between the portable terminal 100 and the PC 200, then if information which has been entered into the PC 200, for which authentication is necessary, matches information which is stored in the portable terminal 100, the authentication process is automatically performed between the portable terminal 100 and the PC 200. Information that is stored in the portable terminal 100 and is to be checked against information entered into the PC 200 is also hereinafter referred to as "authentication validation information." Specifically, the authentication process can be performed between the portable terminal 100 and the PC 200 by a user only entering information into the PC 200, which the user is attempting to use, without the need of operating the portable terminal 100. Therefore, the information processing system 1 according to an embodiment of the present disclosure can improve user convenience during the authentication process between the portable terminal 100 and the PC 200. Note that, in this embodiment, the authentication validation information may be information using knowledge authentication or information for biometric authentication. The information using knowledge authentication may, for example, be a PIN which is a number having a plurality of digits, pattern information, or the like. The information for biometric authentication may, for example, be information about a fingerprint, veins, a face, or the like.

An example overall configuration of the information processing system 1 according to an embodiment of the present disclosure has been described above with reference to FIG. 1A. Note that the information processing system 1 according to an embodiment of the present disclosure is not limited to the configuration illustrated in FIG. 1A.

FIG. 1B is an explanatory diagram illustrating an example overall configuration of an information processing system 1 according to an embodiment of the present disclosure. Hereinafter, the example overall configuration of the information processing system 1 according to an embodiment of the present disclosure will be described with reference to FIG. 1B.

As illustrated in FIG. 1B, the information processing system 1 according to an embodiment of the present disclosure includes a portable terminal 100, a PC 200, and a server apparatus 300. The configuration of FIG. 1B includes the server apparatus 300 in addition to the configuration of FIG. 1A. In this embodiment, the server apparatus 300 is a web server which provides a service to an authenticated user through the Internet, where the user of the PC 200 is authenticated by causing the user to enter their ID and password to a web browser executed on the PC 200.

Examples of a service (web service) provided by the server apparatus 300 include a social networking service or social networking system (SNS), web mail service, net banking service, and the like.

As in the above example, the portable terminal 100 generates a pair of keys, i.e., a public key pk and a secret key sk. The generated public key pk is provided from the portable terminal 100 to the PC 200 in response to a request from the PC 200. The PC 200 provides the public key pk obtained from the portable terminal 100 to the server apparatus 300 for authentication performed in the server apparatus 300.

Thereafter, the server apparatus 300 performs authentication using an ID and password received from the PC 200, and in addition, performs authentication using a response which the PC 200 has obtained from the portable terminal 100 and then transmitted to the server apparatus 300. Here, the response is made with respect to a challenge which is produced using the public key pk and is transmitted from the server apparatus 300 to the portable terminal 100 through the PC 200.

When authentication is performed by the user, the server apparatus 300 causes the PC 200 to display a screen for allowing the user to select authentication using an ID and a password or authentication using a response to a challenge. The server apparatus 300 also causes the PC 200 to display a screen corresponding to the result of the selection. Thus, if the user is allowed to select an authentication scheme for each website, the server apparatus 300 does not need to cause a web browser executed on the PC 200 to store a key, and can switch an authentication scheme between authentication using an ID and a password and authentication using a response to a challenge for each website.

In this embodiment, when an authentication process is performed between the portable terminal 100 and the server apparatus 300, then if information that has been entered into the PC 200, on which a service provided by the server apparatus 300 is used, matches authentication validation information stored in the portable terminal 100, the authentication process is automatically performed between the portable terminal 100 and the server apparatus 300. Specifically, the authentication process can be performed between the portable terminal 100 and the server apparatus 300 by the user only entering information into the PC 200, which the user is attempting to use, without the need of operating the portable terminal 100. Therefore, the information processing system 1 according to an embodiment of the present disclosure can improve user convenience during the authentication process between the portable terminal 100 and the server apparatus 300.

### [1.2. Example of functional configuration]

An example overall configuration of the information processing system 1 according to an embodiment of the present disclosure has been described above with reference to FIG. 1B. Next, an example functional configuration of the portable terminal 100 according to an embodiment of the present disclosure will be described.

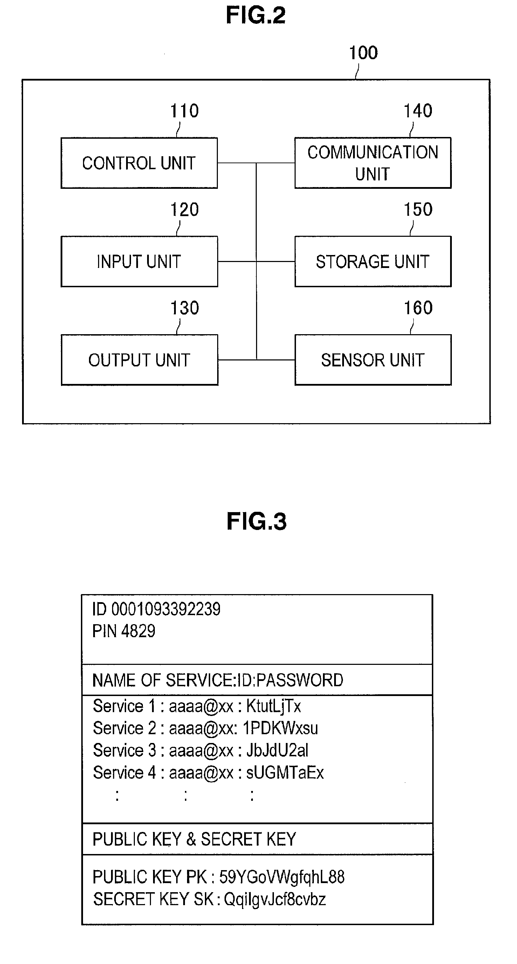

FIG. 2 is an explanatory diagram illustrating an example functional configuration of the portable terminal 100 according to an embodiment of the present disclosure. Hereinafter, the example functional configuration of the portable terminal 100 according to an embodiment of the present disclosure will be described with reference to FIG. 2.

The portable terminal 100 of FIG. 2 is merely an example of the information processing apparatus according to an embodiment of the present disclosure. The portable terminal 100 may be, for example, a device such as a smartphone, table type terminal, portable telephone, or PHS or may be, for example, a wearable device of wristwatch type, wristband type, finger ring type, glasses type, etc., or a key chain type device.

As illustrated in FIG. 2, the portable terminal 100 according to an embodiment of the present disclosure is configured to include a control unit 110, an input unit 120, an output unit 130, a communication unit 140, a storage unit 150, and a sensor unit 160.

The control unit 110 controls an operation of the portable terminal 100. Specifically, each of the constituent elements of the portable terminal 100 of FIG. 2 operates under the control of the control unit 110. The control unit 110, which may be, for example, a microcomputer including a central processing unit (CPU), a read only memory (ROM), a random access memory (RAM), a non-volatile memory unit, and an interface unit, may function as a control unit which controls the entirety of this embodiment. Note that an example functional configuration of the control unit 110 will be described in detail below.

The input unit 120 is an input device which receives the user's input operation. The input unit 120 may be, for example, a touchscreen, keyboard, power supply button, operation button, microphone, or the like.

The output unit 130 is an output device which outputs information which has been processed by the portable terminal 100. The output unit 130 may, for example, be a liquid crystal display, organic EL display, loudspeaker, LED indicator, vibrator, or the like. The output of the output unit 130 may, for example, be generated by the control unit 110.

The communication unit 140 exchanges data with an external device. The external device may be, for example, a computer device, smartphone, smartwatch, network server apparatus, or the like. The communication unit 140 may, for example, be configured to perform network communication via a network access point through near field radio communication, or direct radio communication with an external device having a compatible communication function, according to a scheme such as wireless LAN, Bluetooth (registered trademark), or the like. The data which the communication unit 140 exchanges with the external device includes information related to an authentication process between the portable terminal 100 and the external device. Note that, in addition to information related to an authentication process between the portable terminal 100 and the external device, the communication unit 140 may communicate any data that is to be displayed, such as data of video contents, still image contents, electronic books, etc., computer usable data such as image data, text data, spreadsheet data, etc., that are generated by the portable terminal 100, game images, and the like.

The storage unit 150 may be, for example, a read only memory (ROM), random access memory (RAM), non-volatile memory unit, or the like. The storage unit 150 stores information which is used by the control unit 110 to control the portable terminal 100, computer usable data such as image data, text data, spreadsheet data, etc., that are generated by the portable terminal 100, data of an application performed by the portable terminal 100, or the like. The storage unit 150 also stores information which is necessary during authentication of the PC 200, such as the ID, the password, the secret key, and the like. It is desirable that an area of the storage unit 150 where the secret key generated by the control unit 110 is stored be tamper-resistant. In addition to the area of the storage unit 150 where the ID, the password, the secret key, and the like are stored, the entire storage unit 150, the entire control unit 110, or the entire portable terminal 100 may be tamper-resistant.

FIG. 3 is an explanatory diagram illustrating example information stored in the storage unit 150. FIG. 3 illustrates, as example information stored in the storage unit 150, a combination of a user ID, a personal identification number (PIN), an ID and password for using a service provided by the server apparatus 300, and a public key pk and secret key sk which are used when authentication performed according to a public key authentication scheme. Of course, not all of these items of information need to be stored in the storage unit 150.

The PIN stored in the storage unit 150 is to be compared with a code which is a number having a plurality of digits that is entered into the PC 200, for which authentication is necessary. If the PIN stored in the storage unit 150 matches the code entered into the PC 200, the portable terminal 100 automatically performs the authentication process between itself and the PC 200 using information stored in the storage unit 150.

Note that information that is entered into the PC 200, for which authentication is necessary, is not limited to the code that is a number having a plurality of digits, and information that the portable terminal 100 compares with the information that is entered into the PC 200 is not limited to a PIN. For example, the automatic authentication process between the portable terminal 100 and the PC 200 may be triggered when pattern information that is obtained by the user tracing a pattern passing through a plurality of points in a plurality of regions in the screen of the PC 200 in an arbitrary order, matches pattern information previously stored in the portable terminal 100. Alternatively, for example, the automatic authentication process between the portable terminal 100 and the PC 200 may be triggered when biometric information about a fingerprint, veins, an iris, a face, or the like, that is recognized by the PC 200, matches biometric information previously stored in the portable terminal 100. Still alternatively, for example, the automatic authentication process between the portable terminal 100 and the PC 200 may be triggered when the user's gesture recognized by the PC 200 matches a gesture previously stored in the portable terminal 100.

The number of secret keys sk stored in the storage unit 150 is not limited to one and may be two or more. The use of each secret key sk stored in the storage unit 150 may be set to be permitted or forbidden. If the use of a secret key sk is permitted, it may be determined whether or not an authentication process is to be automatically performed using the secret key sk. If the use of a secret key sk is permitted and it is determined that an authentication process is to be automatically performed using the secret key sk, the portable terminal 100 automatically generates a response to a challenge from the PC 200 using the secret key sk without the user's acknowledgement, and transmits the response to the PC 200.

The sensor unit 160 is a sensor which detects a motion of the portable terminal 100. The sensor unit 160 may be, for example, a sensor, such as an acceleration sensor, gravity sensor, gyroscopic sensor, illuminance sensor, linear acceleration sensor, geomagnetic sensor, near-field sensor, rotation vector sensor, or the like. The sensor unit 160 may be, for example, a sensor which obtains a current position, such as a GPS module. Sensor data obtained by sensing using the sensor unit 160 is acquired by the control unit 110.

An example functional configuration of the portable terminal 100 according to an embodiment of the present disclosure has been described above with reference to FIG. 2. Next, an example functional configuration of the control unit 110 included in the portable terminal 100 according to an embodiment of the present disclosure will be described.

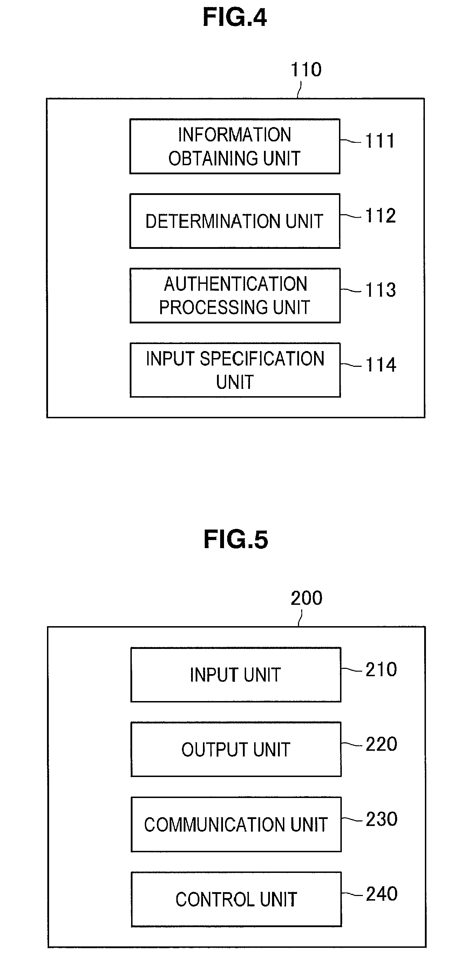

FIG. 4 is an explanatory diagram illustrating an example functional configuration of the control unit 110 included in the portable terminal 100 according to an embodiment of the present disclosure. Hereinafter, the example functional configuration of the control unit 110 included in the portable terminal 100 according to an embodiment of the present disclosure will be described with reference to FIG. 4.

As shown in FIG. 4, the control unit 110 is configured to include an information obtaining unit 111, a determination unit 112, an authentication processing unit 113, and an input specification unit 114.

The information obtaining unit 111 obtains information that is transmitted from the PC 200 and is then received by the communication unit 140. The information obtaining unit 111 also obtains information stored in the storage unit 150. The information obtained by the information obtaining unit 111 may include, for example, authentication validation information stored in the storage unit 150, information (a code, pattern information, biometric information, etc.) entered into the PC 200, that is to be compared with the authentication validation information stored in the storage unit 150, authentication information such as a user ID and a password, a secret key, or the like, that is stored in the storage unit 150, and the like.

The determination unit 112 performs the process of comparing authentication validation information stored in the storage unit 150 with information entered into the PC 200, that is to be compared with the authentication validation information stored in the storage unit 150, to determine whether or not these two pieces of information match. If the authentication validation information matches the information entered into the PC 200, the portable terminal 100 goes to the step of performing the authentication process between itself and the PC 200 using the authentication processing unit 113. On the other hand, if the authentication validation information does not match the information entered into the PC 200, the portable terminal 100 does not go to the step of performing the authentication process between itself and the PC 200 using the authentication processing unit 113. The determination unit 112 may transmit the result of the comparison of the two pieces of information to the PC 200 through the communication unit 140.

The authentication processing unit 113, when receiving an authentication request from the PC 200, performs the authentication process between the portable terminal 100 and the PC 200 using information (an ID and a password, or a secret key sk) stored in the storage unit 150. When the portable terminal 100 is authenticated by the PC 200 according to the password authentication scheme, then if the authentication validation information stored in the storage unit 150 matches the information entered into the PC 200, the authentication processing unit 113 transmits information indicating that the portable terminal 100 is authenticated by the PC 200 according to the password authentication scheme, to the PC 200 through the communication unit 140. Thereafter, in response to the authentication request from the PC 200, the authentication processing unit 113 transmits the ID and password stored in the storage unit 150 to the PC 200 through the communication unit 140. Note that when the portable terminal 100 is authenticated by the PC 200 according to the password authentication scheme, then if the authentication validation information stored in the storage unit 150 matches the information entered into the PC 200, the authentication processing unit 113 may directly transmits the ID and password stored in the storage unit 150 to the PC 200 through the communication unit 140 instead of transmitting information indicating that the portable terminal 100 is to be authenticated by the PC 200 according to the password authentication scheme.

When the portable terminal 100 is authenticated by the PC 200 according to the public key authentication scheme, then if the authentication validation information stored in the storage unit 150 matches the information entered into the PC 200, the authentication processing unit 113 transmits information indicating that the portable terminal 100 is authenticated by the PC 200 according to the public key authentication scheme, to the PC 200 through the communication unit 140. Thereafter, the authentication processing unit 113 performs the process of generating a reply to the authentication request from the PC 200 using the secret key sk. The reply generated by the authentication processing unit 113 is transmitted to the PC 200 through the communication unit 140. The PC 200 performs the process of authenticating the portable terminal 100 based on whether or not the reply generated by the authentication processing unit 113 is valid.

In this embodiment, if the determination unit 112 determines that the authentication validation information stored in the storage unit 150 matches the information entered into the PC 200, the authentication processing unit 113 automatically performs the authentication process between the portable terminal 100 and the PC 200. Specifically, if the information entered into the PC 200 matches the authentication validation information stored in the storage unit 150, the portable terminal 100 can be caused to automatically perform the authentication process between itself and the PC 200 without the need of the user's operation of the portable terminal 100.

The input specification unit 114 specifies the type of authentication validation information which is to be entered into the PC 200, with respect to the PC 200. For example, when the portable terminal 100 has a PIN and pattern information as authentication validation information, the input specification unit 114 specifies which of a PIN and pattern information is to be used, with respect to the PC 200.

In the information processing system 1 according to an embodiment of the present disclosure, for example, when a series of authentication steps is performed between the portable terminal 100 and the PC 200, the portable terminal 100 and the PC 200 may be allowed to communicate with each other (initial communication) to exchange information. The information exchanged during the initial communication may include, for example, information for uniquely identifying the portable terminal 100, information for identifying the type of the PC 200, information indicating the type of authentication validation information stored in the portable terminal 100, information indicating the type of authentication validation information that can be entered into the PC 200, and the like. When the portable terminal 100 and the PC 200 are caused to perform the initial communication to exchange information, the PC 200 can determine which portable terminal 100 is to be authenticated or what type of authentication validation information the portable terminal 100 has, and the portable terminal 100 can determine what type of authentication validation information is to be entered into the PC 200, for example.

In addition, when the portable terminal 100 and the PC 200 are caused to exchange information related to authentication validation information, the input specification unit 114 can specify which type of authentication validation information is to be used as authentication validation information that the user enters into the PC 200. Note that the input specification unit 114 may specify which type of authentication validation information is to be used, based on a predetermined priority level, or the type of a device which is to be authenticated, for example. For example, if a device that is to be authenticated has an input device, such as a keyboard or the like, like the PC 200, the input specification unit 114 may choose a PIN as authentication validation information. If a device that is to be authenticated does not have an input device, such as a keyboard or the like, like a tablet-type portable terminal or the like, the input specification unit 114 may choose information which does not involve inputting of characters, such as, for example, pattern information or biometric information, as authentication validation information. Also, for example, if it is found during the initial communication that a device that is to be authenticated has a device for entering biometric information, the input specification unit 114 may instruct the PC 200 to cause a user to enter biometric information as authentication validation information.

The portable terminal 100 according to an embodiment of the present disclosure thus configured can automatically perform the authentication process between itself and the PC 200. The portable terminal 100 according to an embodiment of the present disclosure automatically performs the authentication process between itself and the PC 200 if information entered into the PC 200 matches authentication validation information stored in the storage unit 150, whereby user convenience can be improved while security during authentication is ensured.

An example functional configuration of the control unit 110 included in the portable terminal 100 according to an embodiment of the present disclosure has been described above. Next, an example functional configuration of the PC 200 according to an embodiment of the present disclosure will be described.

FIG. 5 is an explanatory diagram illustrating an example functional configuration of the PC 200 according to an embodiment of the present disclosure. Hereinafter, the example functional configuration of the PC 200 according to an embodiment of the present disclosure will be described with reference to FIG. 5.

As shown in FIG. 5, the PC 200 according to an embodiment of the present disclosure is configured to include an input unit 210, an output unit 220, a communication unit 230, and a control unit 240.

The input unit 210 receives information that is entered into the PC 200. The information received by the input unit 210 may include character information, pattern information, biometric information, and the like. The input unit 210 may include, for example, a keyboard, mouse, touchscreen, fingerprint sensor, vein sensor, camera, or the like. The information received by the input unit 210 is processed by the control unit 240 as necessary before being output through the output unit 220 or transmitted by the communication unit 230. In this embodiment, the input unit 210 may function as an input device for allowing a user to enter authentication validation information.

The output unit 220 is an output device that outputs information which has been processed by the PC 200. The output unit 220 may, for example, be a liquid crystal display, organic EL display, loudspeaker, LED indicator, vibrator, or the like. The output of the output unit 220 may, for example, be generated by the control unit 240.

The communication unit 230 exchanges data with an external device, such as, for example, the portable terminal 100. The communication unit 230 may, for example, be configured to perform network communication via a network access point through near-field radio communication, or direct radio communication with an external device having a compatible communication function, according to a scheme such as wireless LAN, Bluetooth (registered trademark), or the like.

The control unit 240 controls an operation of the PC 200. Specifically, each of the constituent elements of the PC 200 of FIG. 5 operates under the control of the control unit 240. The control unit 240, which may, for example, be a microcomputer including a CPU, ROM, RAM, non-volatile memory unit, and interface unit, may function as a control unit that controls the entirety of this embodiment.

The PC 200, when causing the user to perform an authentication process using the portable terminal 100, causes the user to enter information which is to be checked against authentication validation information stored in the portable terminal 100. The PC 200 transmits the entered information to the portable terminal 100 through the communication unit 230. If the information entered into the PC 200 matches the authentication validation information stored in the portable terminal 100, the PC 200 performs an authentication process between itself and the portable terminal 100. The authentication process between the PC 200 and the portable terminal 100 is performed by the control unit 240. Therefore, the control unit 240 may function as an example authentication unit according to an embodiment of the present disclosure.

The PC 200 according to an embodiment of the present disclosure thus configured can automatically perform the authentication process between itself and the portable terminal 100. The PC 200 according to an embodiment of the present disclosure automatically performs the authentication process between itself and the portable terminal 100 if the information entered by the user matches the authentication validation information stored in the portable terminal 100, whereby user convenience can be improved while security during authentication is ensured.

An example functional configuration of the PC 200 according to an embodiment of the present disclosure has been described above with reference to FIG. 5. Next, an example operation of the information processing system 1 according to an embodiment of the present disclosure will be described.

### [1.3. Example Operation of System]

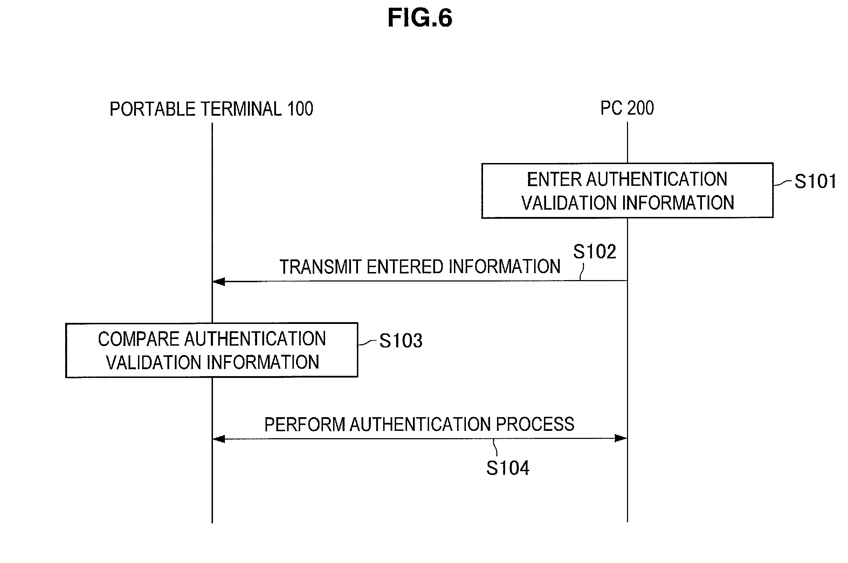

FIG. 6 is a sequence diagram showing an example operation of the portable terminal 100 and the PC 200 according to an embodiment of the present disclosure. The sequence diagram of FIG. 6 shows an example operation during the authentication process between the portable terminal 100 and the PC 200. An example operation of the information processing system 1 according to an embodiment of the present disclosure will now be described with reference to FIG. 6.

When the authentication process is performed between the portable terminal 100 and the PC 200, the PC 200 initially causes the user to enter authentication validation information (step S101). If the authentication validation information is a code or pattern information, the PC 200 outputs a screen for causing the user to enter the authentication validation information to the output unit 220, for example, according to the user's operation or when detecting that the portable terminal 100 has entered the communication range of the PC 200. When the authentication validation information is biometric information, the PC 200 outputs a screen for prompting the user to enter biometric information to the output unit 220.

After the PC 200 has caused the user to enter the authentication validation information in step S101, the PC 200 transmits the entered authentication validation information to the portable terminal 100 (step S102). The transmission process of step S102 is performed by the communication unit 230.

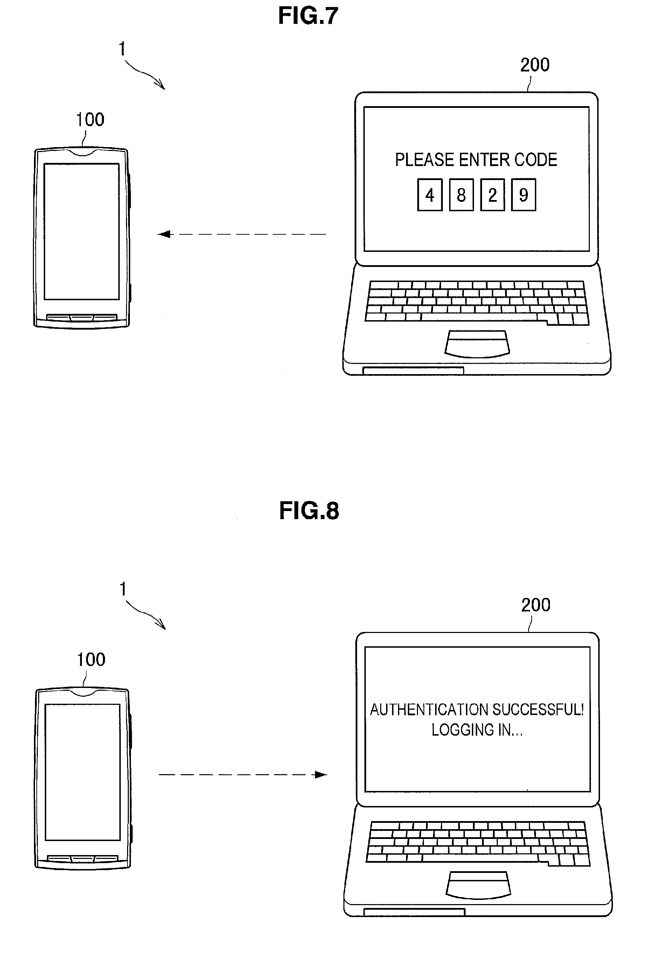

FIG. 7 is a diagram for describing an example operation of the portable terminal 100 and the PC 200 according to an embodiment of the present disclosure. FIG. 7 shows a situation that the PC 200 displays a screen for causing the user to enter the authentication validation information in order to log in to the PC 200, and also, the authentication validation information entered into the PC 200 is transmitted to the portable terminal 100. In the example of FIG. 7, the PC 200 displays a screen for causing the user to enter a code having four digits as the authentication validation information. The four-digit code is used to use authentication information for logging in to the PC 200, that is stored in the portable terminal 100, but is not used to log in to the PC 200.

The portable terminal 100, when receiving the authentication validation information from the PC 200, compares authentication validation information stored in the storage unit 150 with the authentication validation information received from the PC 200 (step S103). The comparison process of step S103 is performed by the determination unit 112. If the authentication validation information stored in the storage unit 150 matches the authentication validation information received from the PC 200, the portable terminal 100 performs the authentication process between itself and the PC 200 (step S104).

A specific example of the authentication process of step S104 will be described. For example, when the portable terminal 100 is authenticated by the PC 200 according to the password authentication scheme, then if the authentication validation information stored in the storage unit 150 matches the information entered into the PC 200, the portable terminal 100 transmits information indicating that the portable terminal 100 is authenticated by the PC 200 according to the password authentication scheme, to the PC 200 through the communication unit 140. Thereafter, in response to the authentication request from the PC 200, the portable terminal 100 transmits an ID and password stored in the storage unit 150 to the PC 200 through the communication unit 140. Note that when the portable terminal 100 is authenticated by the PC 200 according to the password authentication scheme, then if the authentication validation information stored in the storage unit 150 matches the information entered into the PC 200, the portable terminal 100 may directly transmit an ID and password stored in the storage unit 150 to the PC 200 through the communication unit 140 instead of transmitting, to the PC 200, a notification that the portable terminal 100 is authenticated by the PC 200 according to the password authentication scheme.

Another specific example of the authentication process of step S104 will be described. For example, when the portable terminal 100 is authenticated by the PC 200 according to the public key authentication scheme, then if the authentication validation information stored in the storage unit 150 matches the information entered into the PC 200, the portable terminal 100 transmits information indicating that the portable terminal 100 is authenticated by the PC 200 according to the public key authentication scheme, to the PC 200 through the communication unit 140. Thereafter, the portable terminal 100 performs the process of generating a reply to an authentication request from the PC 200 using the secret key sk. The portable terminal 100 transmits the generated reply to the PC 200 through the communication unit 140. The PC 200 performs the process of authenticating the portable terminal 100 based on whether or not the reply generated by the portable terminal 100 is valid.

In the information processing system 1 according to an embodiment of the present disclosure, before the user is caused to enter authentication validation information into the PC 200 in step S101, the portable terminal 100 and the PC 200 may be caused to communicate with each other (initial communication) to exchange information. The information exchanged during the initial communication may include, for example, information for uniquely identifying the portable terminal 100, information indicating the type of authentication validation information stored in the portable terminal 100, information indicating the type of authentication validation information that can be entered into the PC 200, and the like. When the portable terminal 100 and the PC 200 are caused to perform the initial communication to exchange information, the PC 200 can determine which portable terminal 100 is to be authenticated or what type of authentication validation information the portable terminal 100 has, and the portable terminal 100 can determine what type of authentication validation information can be entered into the PC 200, for example. By causing the portable terminal 100 and the PC 200 to exchange information about authentication validation information, authentication validation information which is entered by the user can be specified from the portable terminal 100 or by the PC 200 in the information processing system 1 according to an embodiment of the present disclosure.

FIG. 8 is a diagram for describing an example operation of the portable terminal 100 and the PC 200 according to an embodiment of the present disclosure. FIG. 8 shows a situation that the portable terminal 100 compares authentication validation information transmitted from the PC 200 with authentication validation information stored in the storage unit 150 of the portable terminal 100, and transmits the result of the comparison to the PC 200. In the example of FIG. 8, the two pieces of authentication validation information match, and the PC 200 displays, on the screen, information indicating that the authentication of the portable terminal 100 is successful authenticated and the login process is being performed.

If the authentication process between the portable terminal 100 and the PC 200 is performed according to the password authentication scheme, the portable terminal 100 transmits a user ID and password for the PC 200 stored in the storage unit 150 to the PC 200 in step S104. The PC 200 performs the authentication process using the user ID and password received from the portable terminal 100. If the user ID and password received from the portable terminal 100 are a valid combination, the PC 200 completes the process of allowing the user to log in to the PC 200 so that the PC 200 transitions to a state in which the user is allowed to use the PC 200.

If the authentication process between the portable terminal 100 and the PC 200 is performed according to the public key authentication scheme, challenge-and-response authentication is performed between the portable terminal 100 and the PC 200 in step S104. The portable terminal 100 initially transmits, to the PC 200, information indicating that matching of authentication validation information is successful. The PC 200, when receiving the information indicating that matching of authentication validation information is successful, generates a challenge using the public key corresponding to the secret key stored in the portable terminal 100, and transmits the challenge to the portable terminal 100. Thereafter, the portable terminal 100 generates a response to the challenge received from the PC 200 using the secret key stored in the storage unit 150, and returns the response to the PC 200. The PC 200 checks the response received from the portable terminal 100. If the response has been generated using the secret key corresponding to the public key, the PC 200 determines that the user of the portable terminal 100 is authorized to use the PC 200, the PC 200 completes the process of allowing the user to log in to the PC 200 so that the PC 200 transitions to a state in which the user is allowed to use the PC 200.

Note that if, as a result of the comparison process of step S103, it is found that the authentication validation information stored in the storage unit 150 does not match the authentication validation information received from the PC 200, the portable terminal 100 may transmit, to the PC 200, information indicating that these two pieces of authentication validation information do not match. The PC 200, when the entered authentication validation information does not match the authentication validation information stored in the portable terminal 100, may output information indicating this mismatch to the output unit 220 so that the user is caused to enter authentication validation information again.

The portable terminal 100 and the PC 200 according to an embodiment of the present disclosure can automatically perform the authentication process between the portable terminal 100 and the PC 200. In the above operation of the portable terminal 100 and the PC 200 according to an embodiment of the present disclosure, the authentication process is automatically performed between the portable terminal 100 and the PC 200 if the information entered into the PC 200 by the user matches the authentication validation information stored in the portable terminal 100, whereby user convenience can be improved while security during authentication is ensured.

Note that if the mismatch between the authentication validation information entered into the PC 200 by the user and the authentication validation information stored in the portable terminal 100 has occurred a predetermined number of times consecutively, the portable terminal 100 may lock the authentication information stored in the storage unit 150. Note that when the portable terminal 100 has locked the authentication information, the lock may be automatically released after a predetermined period of time has elapsed, or alternatively, the lock may be released when information for releasing the lock is entered into the portable terminal 100 or the PC 200.

An example operation of the information processing system 1 according to an embodiment of the present disclosure has been described above with reference to FIG. 6. Next, another example operation will be described.

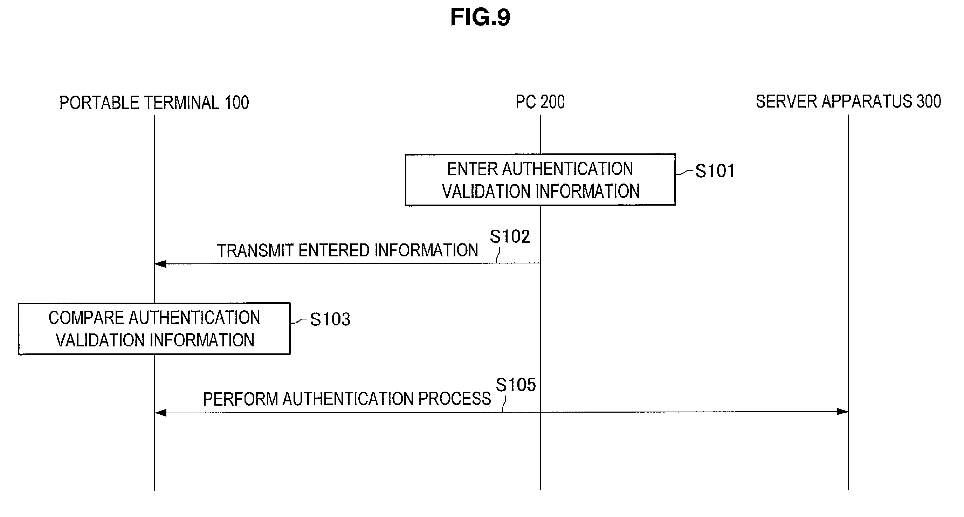

FIG. 9 is a sequence diagram showing an example operation of the portable terminal 100, the PC 200, and the server apparatus 300 according to an embodiment of the present disclosure. The sequence diagram of FIG. 9 shows an example operation during the authentication process between the portable terminal 100 and the server apparatus 300. An example operation of the information processing system 1 according to an embodiment of the present disclosure will now be described with reference to FIG. 9.

As in the example in the sequence diagram of FIG. 6, the PC 200 initially causes the user to enter authentication validation information (step S101). After the user has entered authentication validation information into the PC 200 in step S101, the PC 200 transmits the entered authentication validation information to the portable terminal 100 (step S102).

The portable terminal 100, when receiving the authentication validation information from the PC 200, compares the authentication validation information stored in the storage unit 150 with the authentication validation information received from the PC 200 (step S103). If the authentication validation information stored in the storage unit 150 matches the authentication validation information received from the PC 200, the portable terminal 100 performs the authentication process between itself and the server apparatus 300 (step S105).

A specific example of the authentication process of step S105 will be described. For example, when the portable terminal 100 is authenticated by the server apparatus 300 according to the password authentication scheme, then if authentication validation information stored in the storage unit 150 matches information entered into the PC 200, the portable terminal 100 transmits information indicating that the portable terminal 100 is authenticated by the PC 200 according to the password authentication scheme, to the PC 200 through the communication unit 140, and the PC 200 transfers the information indicating that the portable terminal 100 is authenticated by the PC 200 according to the password authentication scheme, that has been received from the portable terminal 100, to the server apparatus 300. Thereafter, in response to an authentication request from the server apparatus 300, the portable terminal 100 transmits an ID and password stored in the storage unit 150 to the PC 200 through the communication unit 140, and the PC 200 transfers the ID and password received from the portable terminal 100 to the server apparatus 300. Note that when the portable terminal 100 is authenticated by the PC 200 according to the password authentication scheme, then if the authentication validation information stored in the storage unit 150 matches the information entered into the PC 200, the portable terminal 100 may directly transmit the ID and password stored in the storage unit 150 to the server apparatus 300 through the communication unit 140 and the PC 200, instead of transmitting, to the server apparatus 300, the information indicating that the portable terminal 100 is authenticated according to the password authentication scheme.

Another specific example of the authentication process of step S104 will be described. For example, when the portable terminal 100 is authenticated by the server apparatus 300 according to the public key authentication scheme, then if authentication validation information stored in the storage unit 150 matches information entered into the PC 200, the portable terminal 100 transmits information indicating that the portable terminal 100 is authenticated by the PC 200 according to the public key authentication scheme, to the PC 200 through the communication unit 140, and the PC 200 transfers, to the server apparatus 300, the information indicating that the portable terminal 100 is authenticated by the PC 200 according to the public key authentication scheme, that has been received from the portable terminal 100. Thereafter, the portable terminal 100 performs the process of generating a reply to an authentication request from the server apparatus 300 using the secret key sk. The portable terminal 100 transmits the generated reply to the PC 200 through the communication unit 140. The PC 200 transfers the reply received from the portable terminal 100 to the server apparatus 300. The server apparatus 300 performs the process of authenticating the portable terminal 100 based on whether or not the reply generated by the portable terminal 100 is valid.

By performing the above operation, the portable terminal 100, the PC 200, and the server apparatus 300 according to an embodiment of the present disclosure can automatically perform the authentication process between the portable terminal 100 and the server apparatus 300. By performing the above operation, the portable terminal 100, the PC 200, and the server apparatus 300 according to an embodiment of the present disclosure automatically performs the authentication process between the portable terminal 100 and the server apparatus 300 if information entered into the PC 200 by the user matches authentication validation information stored in the portable terminal 100, whereby user convenience can be improved while security during authentication is ensured.

In the foregoing, the PC 200 and the server apparatus 300 have been illustrated as an apparatus for which authentication is necessary, and the authentication process between the portable terminal 100 and the PC 200 or authentication process between the portable terminal 100 and the server apparatus 300 has been described. The present disclosure is not limited to these examples. For example, when an apparatus for which authentication is necessary is a door, a code is entered using a numeric keypad or touchscreen provided on the door, and if the code matches authentication validation information previously stored in the portable terminal 100, the authentication process may be performed between the door and the portable terminal 100. In this case, the code entered into the door is used to use authentication information for unlocking the door, that is stored in the portable terminal 100, but is not used to unlock the door.

For example, an apparatus for which authentication is necessary may be a car. When an apparatus for which authentication is necessary is a car, a device that reads information about a fingerprint or veins as authentication validation information may be provided on the steering wheel of the car, for example. When a user holds the steering wheel of the car, information about a fingerprint or veins is read by the steering wheel. If the information about a fingerprint or veins that has been read as authentication validation information by the steering wheel matches authentication validation information previously stored in the portable terminal 100, the authentication process may be performed between the car and the portable terminal 100. If the car has successfully authenticated the portable terminal 100, the car may perform a control related to driving, such as, for example, the control of automatically starting the engine. Alternatively, for example, a device that reads information about a fingerprint or veins as authentication validation information may be provided on a door of a car. If a device that reads information about a fingerprint or veins as authentication validation information is provided on a door of a car, information about a fingerprint or veins is read by the car door when a user touches the car door. If the information about a fingerprint or veins that has been read as authentication validation information by the car door matches authentication validation information previously stored in the portable terminal 100, the authentication process may be performed between the car and the portable terminal 100. If the car has successfully authenticated the portable terminal 100, the car may perform the control of unlocking the door.

It may be assumed that a plurality of portable terminals 100 have authentication information with respect to a single PC 200 that is an apparatus for which authentication is necessary. In such a case, the PC 200 may have information indicating what authentication validation information is to be used for which portable terminal 100. The PC 200 may, for example, store information indicating that a user is caused to enter a PIN for one portable terminal 100, and a pattern for another portable terminal 100. When the PC 200 thus customizes the type of authentication validation information to be entered, depending on the portable terminal 100, more robust authentication using the portable terminal 100 can be achieved.

When the authentication process is performed between the portable terminal 100 and the PC 200, the portable terminal 100 may initially transmit, to the PC 200, information indicating what type of authentication validation information is entered into the PC 200. For example, when the authentication process is performed between the portable terminal 100 and the PC 200, the portable terminal 100 may initially transmit, to the PC 200, information for causing a user to enter a PIN into the PC 200, and the PC 200, when receiving the information for causing a use to enter a PIN, may output a screen for causing a user to enter a PIN. When a plurality of types of authentication validation information are set between the portable terminal 100 and the PC 200, the portable terminal 100 may specify which type of authentication validation information is to be selected, according to a setting made by a user, or depending on the time zone, or randomly during each authentication process.

### <2: Example of hardware configuration>

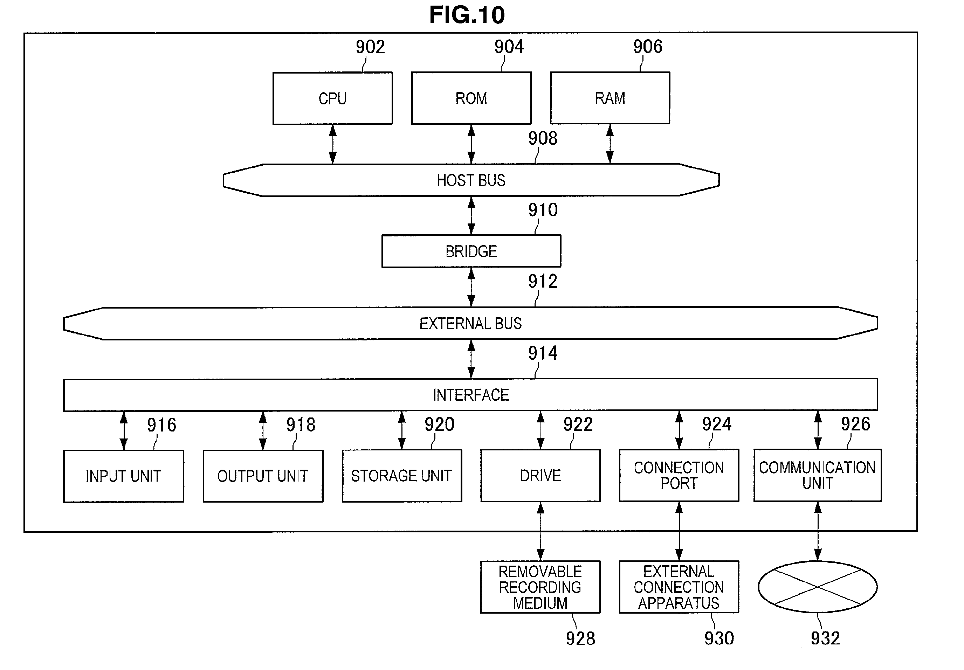

Each algorithm described above can be performed by using, for example, a hardware configuration of the information processing apparatus illustrated in FIG. 10. That is, the process of each algorithm can be carried out by controlling the hardware illustrated in FIG. 10 using a computer program. Additionally, this hardware may be provided in any form including, for example, a personal computer, mobile information terminal such as a mobile phone, PHS or PDA, game machine, navigation device or information processing device for cars, contact or non-contact IC chip, contact or non-contact IC card, or various information appliances. Moreover, PHS is an abbreviation for Personal Handy-phone System. Also, PDA is an abbreviation for Personal Digital Assistant.

As illustrated in FIG. 10, this hardware mainly includes a CPU 902, a ROM 904, a RAM 906, a host bus 908, and a bridge 910. This hardware further includes an external bus 912, an interface 914, an input unit 916, an output unit 918, a storage unit 920, a drive 922, a connection port 924, and a communication unit 926. CPU is an abbreviation for Central Processing Unit. ROM is an abbreviation for Read Only Memory. RAM is an abbreviation for Random Access Memory.

The CPU 902 functions as an arithmetic processing unit or a control unit, for example, and controls all or a part of the operation of each constituent element based on various programs stored in the ROM 904, the RAM 906, the storage unit 920, or a removable recording medium 928. The ROM 904 is a device for storing, for example, a program to be loaded on the CPU 902 or data or the like used in an arithmetic operation. The RAM 906 temporarily or permanently stores, for example, a program to be loaded on the CPU 902 or various parameters or the like suitably changed in execution of the program.

These constituent elements are, for example, connected to each other by the host bus 908 capable of performing high-speed data transmission. The host bus 908 is, for example, connected through the bridge 910 to the external bus 912 having a relatively low data transmission speed. The input unit 916 is, for example, a mouse, keyboard, touch panel, button, switch, or lever. Also, the input unit 916 may be a remote control that can transmit a control signal by using infrared light or other radio waves. The input unit 916 may be various sensors, such as a geomagnetic sensor, acceleration sensor, or the like, or something which obtains a current position, such as a GPS or the like.

The output unit 918 is, for example, a display device such as a CRT, LCD, PDP or ELD, audio output device such as a speaker or headphone, printer, mobile phone, or fax machine, that can visually or audibly notify a user of acquired information. CRT is an abbreviation for Cathode Ray Tube. LCD is an abbreviation for Liquid Crystal Display. PDP is an abbreviation for Plasma Display Panel. ELD is an abbreviation for Electro-Luminescence Display.

The storage unit 920 is a device for storing various types of data. The storage unit 920 is, for example, a magnetic storage device such as a hard disk drive (HDD) or the like, semiconductor storage device, optical storage device, or magneto-optical storage device. HDD is an abbreviation for Hard Disk Drive.

The drive 922 is a device that reads information stored on the removable recording medium 928 such as a magnetic disk, optical disk, magneto-optical disk, or semiconductor memory, or writes information to the removable recording medium 928. The removable recording medium 928 is, for example, a DVD medium, Blu-ray medium, HD-DVD medium, various types of semiconductor storage media, or the like. Of course, the removable recording medium 928 may be, for example, an IC card on which a non-contact IC chip is mounted, or an electronic device. IC is an abbreviation for Integrated Circuit.

The connection port 924 is a port such as an USB port, IEEE1394 port, SCSI, RS-232C port, or port for connecting an externally connected device 930 such as an optical audio terminal. The externally connected device 930 is, for example, a printer, mobile music player, digital camera, digital video camera, or IC recorder. USB is an abbreviation for Universal Serial Bus. SCSI is an abbreviation for Small Computer System Interface.

The communication unit 926 is a communication device for connecting to a network 932, and is, for example, a communication card for a wired or wireless LAN, Bluetooth (registered trademark), or WUSB, optical communication router, ADSL router, or device for contact or non-contact communication. The network 932 connected to the communication unit 926 is configured from a wired or wireless network, and is, for example, the Internet, a home LAN, infrared communication, visible light communication, broadcasting, or satellite communication. LAN is an abbreviation for Local Area Network. WUSB is an abbreviation for Wireless USB. ADSL is an abbreviation for Asymmetric Digital Subscriber Line.

For example, when the portable terminal 100 has such a hardware configuration, the functionality of the control unit 110 may, for example, be carried out by the CPU 902. The functionality of the input unit 120 may, for example, be carried out by the input unit 916. The functionality of the output unit 130 may, for example, be carried out by the output unit 918. The functionality of the communication unit 140 may, for example, be carried out by the communication unit 926. The functionality of the storage unit 150 may, for example, be carried out by the ROM 904, RAM 906, storage unit 920, or removable recording medium 928. The functionality of the sensor unit 160 may, for example, be carried out by the input unit 916.

### <3. Conclusion>

As described above, according to an embodiment of the present disclosure, the information processing system 1 is provided in which when the authentication process is performed between the portable terminal 100 and the PC 200 or the server apparatus 300, then if information entered into the PC 200 for which authentication is necessary matches information (authentication validation information) stored in the portable terminal 100, the authentication process is automatically performed between the portable terminal 100 and the PC 200 or the server apparatus 300. In the information processing system 1 according to an embodiment of the present disclosure, the authentication process can be performed between the portable terminal 100 and the PC 200 or the server apparatus 300 by only entering information into the PC 200 without the need of operating the portable terminal 100. Therefore, in the information processing system 1 according to an embodiment of the present disclosure, user convenience during the authentication process between the portable terminal 100 and the PC 200 or the server apparatus 300 can be improved.

The steps in the processes performed by each apparatus in the present specification may not necessarily be processed chronologically in the orders described in the sequence diagrams and the flowcharts. For example, the steps in the processes performed by each apparatus may be processed in different orders from the orders described in the flowcharts or may be processed in parallel.

Also, a computer program causing hardware such as a CPU, a ROM, and a RAM included in each apparatus to carry out the equivalent functions as the above-described configuration of each apparatus can be generated. Also, a storage medium having the computer program stored therein can be provided. Also, by configuring each functional block illustrated in the functional block diagram as hardware, the series of processes can also be realized by the hardware. Also, the computer program can be distributed as a dedicated application program for various information processing terminals such as smartphones or tablets from a predetermined application distribution site on a network such as the Internet. The application distribution site can be provided by a server apparatus including a storage apparatus that stores a program and a communication apparatus that transmits the application program in response to a download request from clients (various information processing terminals such as smartphones or tablets).

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

It should be understood by those skilled in the art that various modifications, combinations, sub-combinations and alterations may occur depending on design requirements and other factors insofar as they are within the scope of the appended claims or the equivalents thereof.

In addition, the effects described in the present specification are merely illustrative and demonstrative, and not limitative. In other words, the technology according to the present disclosure can exhibit other effects that are evident to those skilled in the art along with or instead of the effects based on the present specification.

Additionally, the present technology may also be configured as below.
(1) An information processing apparatus including:
   an information obtaining unit configured to obtain authentication validation information input to another apparatus from the another apparatus; and
   an authentication unit configured to, if the authentication validation information obtained by the information obtaining unit from the another apparatus matches authentication validation information managed by the information processing apparatus, perform an authentication process between the information processing apparatus and the another apparatus using the authentication information managed by the information processing apparatus.
(2) The information processing apparatus according to (1), wherein
   the authentication validation information obtained by the information obtaining unit is information using knowledge authentication.
(3) The information processing apparatus according to (2), wherein
   the information using knowledge authentication is information obtained based on a code input.
(4) The information processing apparatus according to (2), wherein
   the information using knowledge authentication is information obtained based on a pattern input.
(5) The information processing apparatus according to (1), wherein
   the authentication validation information obtained by the information obtaining unit is biometric information.
(6) The information processing apparatus according to any one of (1) to (5), wherein
   the authentication unit performs the authentication process between the information processing apparatus and the another apparatus according to a public key cryptography scheme.
(7) The information processing apparatus according to any one of (1) to (5), wherein
   the authentication unit performs the authentication process between the information processing apparatus and the another apparatus according to a password authentication scheme.
(8) The information processing apparatus according to any one of (1) to (7), further including:
   an input specification unit configured to specify a type of the authentication validation information input to the another apparatus.
(9) The information processing apparatus according to (8), wherein
   the input specification unit specifies the type of the authentication validation information input to the another apparatus based on a detail of the another apparatus.
(10) An information processing apparatus including:
   an information transmission unit configured to transmit input authentication validation information to another apparatus; and
   an authentication unit configured to perform an authentication process between the information processing apparatus and the another apparatus based on authentication information managed by the another apparatus.
(11) The information processing apparatus according to (10), wherein
   the input authentication validation information is information using knowledge authentication.
(12) The information processing apparatus according to (11), wherein
   the information using knowledge authentication is information obtained based on a code input.
(13) The information processing apparatus according to (11), wherein
   the information using knowledge authentication is information obtained based on a pattern input.
(14) The information processing apparatus according to (10), wherein
   the input authentication validation information is biometric information.
(15) The information processing apparatus according to any one of (10) to (14), wherein
   the authentication unit performs the authentication process between the information processing apparatus and the another apparatus according to a public key cryptography scheme.
(16) The information processing apparatus according to any one of (10) to (14), wherein
   the authentication unit performs the authentication process between the information processing apparatus and the another apparatus according to a password authentication scheme.
(17) The information processing apparatus according to any one of (10) to (16), further including:
   an input unit configured to input the authentication validation information.
(18) The information processing apparatus according to (17), wherein
   a type of the authentication validation information input using the input unit is specified by the another apparatus.
(19) A non-transitory computer-readable recording medium having a computer program recorded thereon, the computer program causing a computer to execute:
   obtaining authentication validation information input to another apparatus from the another apparatus; and
   performing an authentication process between the computer and the another apparatus using key information managed by the computer if the authentication validation information obtained from the another apparatus matches authentication validation information managed by the computer.
(20) A non-transitory computer-readable recording medium having a computer program recorded thereon, the computer program causing a computer to execute:
   transmitting input authentication validation information to another apparatus; and
   performing an authentication process between the computer and the another apparatus based on authentication information managed by the another apparatus.

## Claims

1. An information processing apparatus comprising:
an information obtaining unit configured to obtain authentication validation information input to another apparatus from the another apparatus; and
an authentication unit configured to, if the authentication validation information obtained by the information obtaining unit from the another apparatus matches authentication validation information managed by the information processing apparatus, perform an authentication process between the information processing apparatus and the another apparatus using the authentication information managed by the information processing apparatus.

2. The information processing apparatus according to claim 1, wherein
the authentication validation information obtained by the information obtaining unit is information using knowledge authentication.

3. The information processing apparatus according to claim 2, wherein
the information using knowledge authentication is information obtained based on at least one of a code input and a pattern input.

4. The information processing apparatus according to claim 1, wherein
the authentication validation information obtained by the information obtaining unit is biometric information.

5. The information processing apparatus according to claim 1, wherein
the authentication unit performs the authentication process between the information processing apparatus and the another apparatus according to a public key cryptography scheme.

6. The information processing apparatus according to claim 1, wherein
the authentication unit performs the authentication process between the information processing apparatus and the another apparatus according to a password authentication scheme.

7. The information processing apparatus according to claim 1, further comprising:
an input specification unit configured to specify a type of the authentication validation information input to the another apparatus.

8. The information processing apparatus according to claim 7, wherein
the input specification unit specifies the type of the authentication validation information input to the another apparatus based on a detail of the another apparatus.

9. An information processing apparatus comprising:
an information transmission unit configured to transmit input authentication validation information to another apparatus; and
an authentication unit configured to perform an authentication process between the information processing apparatus and the another apparatus based on authentication information managed by the another apparatus.

10. The information processing apparatus according to claim 9, wherein
the authentication unit performs the authentication process between the information processing apparatus and the another apparatus according to a public key cryptography scheme.

11. The information processing apparatus according to claim 9, wherein
the authentication unit performs the authentication process between the information processing apparatus and the another apparatus according to a password authentication scheme.

12. The information processing apparatus according to claim 9, further comprising:
an input unit configured to input the authentication validation information.

13. The information processing apparatus according to claim 12, wherein
a type of the authentication validation information input using the input unit is specified by the another apparatus.

14. A non-transitory computer-readable recording medium having a computer program recorded thereon, the computer program causing a computer to execute:
obtaining authentication validation information input to another apparatus from the another apparatus; and
performing an authentication process between the computer and the another apparatus using key information managed by the computer if the authentication validation information obtained from the another apparatus matches authentication validation information managed by the computer.

15. A non-transitory computer-readable recording medium having a computer program recorded thereon, the computer program causing a computer to execute:
transmitting input authentication validation information to another apparatus; and
performing an authentication process between the computer and the another apparatus based on authentication information managed by the another apparatus.
